## Europäisches Patentamt
## European Patent Office
## Office européen des brevets

(19)

(11) Veröffentlichungsnummer: **0 205 905**
**B1**

(12) **EUROPÄISCHE PATENTSCHRIFT**

(45) Veröffentlichungstag der Patentschrift:
**25.10.89**

(21) Anmeldenummer: **86106697.5**

(22) Anmeldetag: **16.05.86**

(51) Int. Cl.⁴: **F 16 N 29/02,** B 65 G 45/02, D 06 C 3/02, F 16 N 27/00

(54) **Verfahren und Vorrichtung zum selbständigen Schmieren der Kettenglieder einer endlos umlaufenden Warenbahn-Transportkette in einer Spannmaschine.**

(30) Priorität: **28.06.85 DE 3523254**

(43) Veröffentlichungstag der Anmeldung:
**30.12.86 Patentblatt 86/52**

(45) Bekanntmachung des Hinweises auf die Patenterteilung:
**25.10.89 Patentblatt 89/43**

(84) Benannte Vertragsstaaten:
**DE FR GB IT**

(56) Entgegenhaltungen:
**EP-A-0 062 868**
**EP-A-0 076 454**
**EP-A-0 078 420**
**DE-A-2 153 735**
**DE-A-3 328 557**
**GB-A-126 429**
**GB-A-2 081 820**
**US-A-3 463 268**
**US-A-3 804 201**

(73) Patentinhaber: **Brückner Trockentechnik GmbH & Co. KG, Benzstrasse 8-10, D-7250 Leonberg (DE)**

(72) Erfinder: **Gresens, Harry, Max- Eyth- Strasse 33, D-7141 Benningen/Neckar (DE)**

(74) Vertreter: **Tetzner, Volkmar, Dr.- Ing. Dr. jur., Van- Gogh- Strasse 3, D-8000 München 71 (DE)**

**Beschreibung**

Die Erfindung betrifft ein Verfahren zum selbsttätigen Schmieren der Kettenglieder einer endlos umlaufenden Transportkette, gemäß dem Oberbegriff des Anspruches 1. Außerdem befaßt sich die Erfindung mit einer Vorrichtung zur Durchführung dieses Verfahrens.

Ein Verfahren und eine Vorrichtung der vorausgesetzten Art sind beispielsweise aus GB-A-2 081 820 bekannt. Danach können beispielsweise die Kettenglieder einer endlos umlaufenden Transportkette oder bestimmte Teile einer anderen sich entsprechend bewegenden Maschine selbsttätig geschmiert werden. Hierzu sind beispielsweise eine Einrichtung zum Messen des entsprechenden Zeitintervalls zwischen aufeinanderfolgenden Kettengliedern oder dergleichen, eine diese Meßergebnisse auswertende und auf diese Meßergebnisse ansprechende Steuereinrichtung sowie eine damit verbundene Schmiermittelzuführeinrichtung zur zeitlich abgestimmten und steuerbaren Schmiermittelzufuhr zu den ausgewählten Kettengliedern vorgesehen, wobei dieses selbsttätige Schmieren der Kettenglieder bei verschiedenen Kettengeschwindigkeiten und auf programmierbare Weise geschehen soll.

Ferner befaßt sich die EP-A-0 076 454 vor allem mit einer Anzeigevorrichtung für Wartungsintervalle bei Brennkraftmaschinen, wobei drehzahlabhängige Zählimpulse über einen einstellbaren Frequenzteiler einer Zählvorrichtung zugeführt werden und die Einstellung des Teilungsverhältnisses durch ein temperaturabhängiges Signal erfolgt. Dadurch werden die Drehzahlimpulse temperaturabhängig gewichtet.

Aus der DE-A-2 153 735 ist außerdem eine Möglichkeit zum selbsttätigen Schmieren von endlos umlaufenden Warenbahn-Transportketten in Spannmaschinen zum Trocknen und/oder Fixieren von textilen Warenbahnen bekannt. Danach werden die Schmiereinrichtungen periodisch in Abhängigkeit von der Kettenumlaufgeschwindigkeit und -länge über eine Steuereinrichtung mit einem Zähler ein- und ausgeschaltet, um die Schmierzeit genau für die Dauer eines Kettenumlaufes bzw. so zu bemessen, daß während der Dauer jeder Schmierzeit jeweils die ganze Kette einmal geschmiert werden kann.

Es hat sich nun, gezeigt, daß für ein optimales Schmieren und somit für eine möglichst hohe Lebensdauer von Warenbahn-Transportketten nicht nur die Kettenumlaufgeschwindigkeit, sondern auch die Temperaturen in der Spannmaschine von Bedeutung sind. Spannmaschinen arbeiten nämlich vielfach mit unterschiedlichen Temperaturen, wobei relativ hohe Temperaturen die Wirksamkeit des zugeführten Schmiermittels erheblich verkürzen.

Der Erfindung liegt daher die Aufgabe zugrunde, ein Verfahren der im Oberbegriff des Anspruches 1 vorausgesetzten Art (und eine zu dessen Durchführung geeignete Vorrichtung) zu schaffen, bei dem eine optimale Schmierung von Warenbahn-Transportketten in Spannmaschinen sowohl unter Beachtung der Kettenumlaufgeschwindigkeit als auch unter Berücksichtigung der jeweiligen Temperatur in der Spannmaschine gewährleistet ist.

Diese Aufgabe wird erfindungsgemäß durch die im Kennzeichen des Anspruches 1 angegebenen Merkmale gelöst.

Bei diesem erfindungsgemäßen Verfahren, bei dem die Transportketten zum Warenbahn-Transport durch die hintereinanderliegenden Wärmebehandlungsfelder einer Spannmaschine verwendet werden, begnügt man sich also nicht nur - wie bei dem zuletzt erläuterten bekannten Verfahren - damit, die der Kettenumlaufgeschwindigkeit proportionalen Impulse zu zählen und dementsprechend die einzelnen Schmierstellen an den Transportketten zu aktivieren, sondern man mißt zusätzlich die Temperatur innerhalb der - in Warenbahn-Transportrichtung gesehen - zweiten Hälfte der Spannmaschine und bildet aus dem festgestellten Temperatur-Istwert einen Multiplikationsfaktor, der dem der jeweiligen Kettenumlaufgeschwindigkeit proportionalen Impulszählsignal aufgeschaltet wird. Hierbei erhält man aus Multiplikationsfaktor mal Impulszählsignal ein Produkt, das als Summensignal dem Zähler (Impulssignalzähler) zugeführt wird, der dann bei Erreichen eines vorgegebenen Zählzieles ein Steuersignal zum Einschalten der Schmiermittelzufuhr auslöst. Hierdurch wird bei dem erfindungsgemäßen Schmierverfahren nicht nur die jeweilige Kettenumlaufgeschwindigkeit der Warenbahn-Transportketten, sondern zugleich auch die jeweils innerhalb der Spannmaschine in bestimmten Wärmebehandlungsfeldern herrschende und auf die Transportketten und deren Schmiermittel einwirkende Temperatur für die Bildung des Steuersignales herangezogen, um die Schmiermittelzufuhr zu den Transportketten bzw. deren Kettenglieder für wenigstens einen ganzen Kettenumlauf einzuschalten. Die Warenbahn-Transportketten können hierdurch in optimaler Weise geschmiert werden, d. h. sie werden weder überschmiert noch unterschmiert.

Es ist ferner vorteilhaft, wenn die Temperatur an mehreren in der Spannmaschine verteilten Meßstellen gemessen wird, wobei höhere Temperaturen jeweils einen höheren Multiplikationsfaktor ergeben und umgekehrt.

Bei diesem Vorgehen können den Temperaturmeßstellen in der Spannmaschine einstellbare Grenzkontakte zugeordnet werden, die jeweils die aktuellen Temperatur-Istwerte liefern, die zur Bildung des jeweiligen Multiplikationsfaktors herangezogen werden, um diese dem Impulszählsignal aufzuschalten. Wird demnach z. B. an einer Temperaturmeßstelle in der Spannmaschine eine relativ hohe Temperatur gemessen, dann wird durch den festgestellten Temperatur-Istwert ein entsprechend hoher Multiplikationsfaktor für das Impulszählsignal gebildet, was wiederum zu einem entsprechend hohen Summensignal führt, das dem Zählern zugeführt wird, wodurch das vorgegebene Zählziel verhältnismäßig schnell erreicht wird. Dies bedeutet also, daß bei einer relativ hohen Temperatur in der Spannmaschine das vorgegebene Zählziel rascher erreicht wird als bei relativ niedrigen Temperaturen. Ebenso wird das Zählziel relativ rasch erreicht, wenn die Warenbahn-Transportketten mit relativ hoher Geschwindigkeit umlaufen, und umgekehrt. Wenn dann das Zählziel im Zähler erreicht ist, wird über das Steuersignal die Schmiermittelzufuhr solange eingeschaltet, bis die Transportketten einen kompletten Umlauf oder mehrere komplette Umläufe (entsprechend der gewünschten Schmierintensität) genau vollendet haben, ohne daß ein Über- oder Unterschmieren der Kettenglieder auftritt. Nach diesem genau bemessenen Schmiervorgang wird die Schmiermittelzufuhr wieder abgestellt, wobei der Zähler nach Beendigung jedes Schmiervorganges vorzugsweise wieder auf die Ausgangsstellung zurückgestellt wird, so daß das Schmierzeitintervall von neuem beginnt, das durch das vorgegebene Zählziel bestimmt wird.

Eine besonders einfache und zuverlässige Temperaturmessung kann dadurch erreicht werden, daß in der Spannmaschine die Lufttemperatur gemessen wird, weil diese im wesentlichen auf die Transportkettenglieder und deren Schmiermittel einwirkt.

Beim kontinuierlichen Trocknen und Fixieren von textilen Warenbahnen hat es sich ferner als zweckmäßig erwiesen, die Temperaturen in der - in Warenbahn-Transportrichtung gesehen - zweiten Hälfte der Spannmaschine zu messen, weil dort erfahrungsgemäß die höchsten Temperaturen auftreten. Wenn dabei eine Spannmaschine mit mehreren hintereinandergeschalteten Wärmebehandlungsfeldern verwendet wird, dann erfolgt das Messen der Temperatur in wenigstens einem der letzten Wärmebehandlungsfelder (vorzugsweise in mehreren).

Eine Vorrichtung zum selbsttätigen Schmieren der Kettenglieder von endlos umlaufenden Warenbahn-Transportketten in einer Spannmaschine zur Durchführung des erfindungsgemäßen Verfahrens kann entsprechend dem Oberbegriff des Anspruches 5 aufgebaut sein, wobei sie sich erfindungsgemäß durch die im Kennzeichen des Anspruches 5 angegebenen Merkmale auszeichnet.

Diese erfindungsgemäße Schmiervorrichtung kann in Anpassung an die Verwendung der Transportketten als Warenbahn-Transportketten in einer Spannmaschine zum Trocknen und /Fixieren von textilen Warenbahnen bei optimaler Schmierarbeit verhältnismäßig einfach aufgebaut sein, wobei sich der Schmiermittelverbrauch auf die erforderlichen Mindestmengen beschränken kann. Vorteilhaft ist dabei ferner, daß die Schmiervorrichtung auch nachträglich bei bereits vorhandenen Maschinen an- bzw. eingebaut werden kann.

Die Erfindung sei im folgenden anhand der Zeichnung näher erläutert. Es zeigen

Fig. 1 eine ganz schematisch gehaltene Gesamtansicht der Spannmaschine mit einer Vorrichtung zur Durchführung des erfindungsgemäßen Schmierverfahrens;

Fig. 2 ein vereinfachtes Fließschema zur weiteren Erläuterung des Schmierverfahrens.

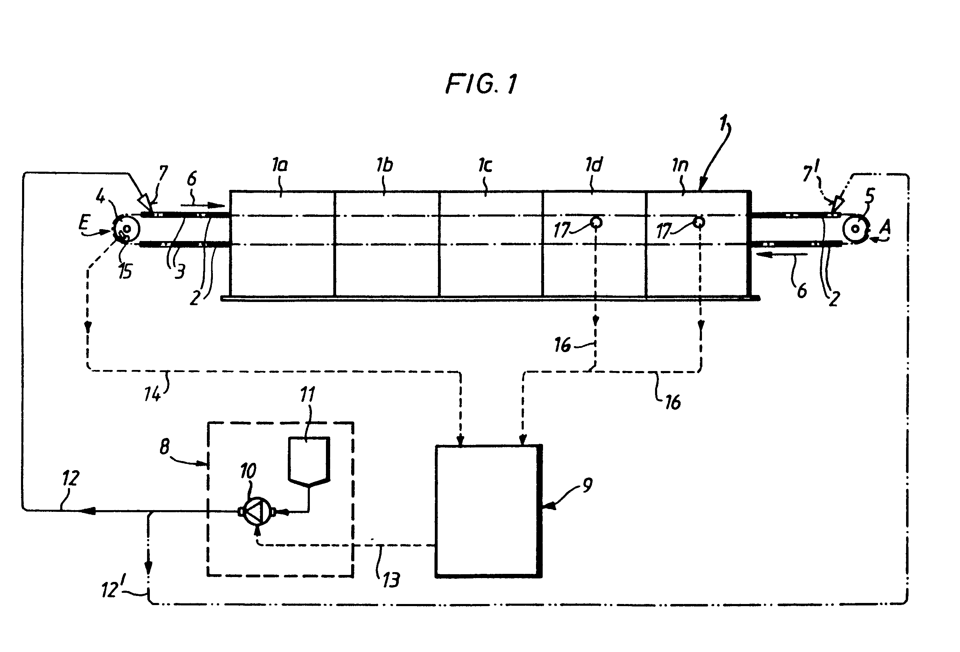

Anhand Fig. 1 sei zunächst ein Ausführungsbeispiel der Schmiervorrichtung im Zusammenhang mit einer Spannmaschine 1 erläutert, wie sie zum Trocknen und Fixieren von textilen Warenbahnen allgemein bekannt ist. Diese Spannmaschine 1 ist in eine beliebige Anzahl von hintereinandergeschalteten Wärmebehandlungsfeldern 1a, 1b, 1c, 1d... 1n unterteilt (an die sich gegebenenfalls auch noch ein Kühlabteil anschließen kann) und enthält in ebenfalls bekannter Weise - zwei endlos umlaufende Transportketten 2 (in Fig. 1 nur strichpunktiert angedeutet), die zum Transport einer zu behandelnden textilen Warenbahn durch die Spannmaschine 1 ausgebildet und angeordnet sind, in Führungsschienen 3 laufen und am Einlaufende E sowie am Auslaufende A um je ein Kettenrad 4 bzw. 5 umgelenkt werden, von denen beispielsweise eines durch einen nicht näher veranschaulichten Antrieb angetrieben wird. Der Kettenumlauf erfolgt in Richtung der Pfeile 6.

Die zur Spannmaschine 1 gehörende Vorrichtung zum selbsttätigen Schmieren der endlos umlaufenden Warenbahn-Transportketten 2 bzw. von deren nicht näher veranschaulichten, an sich bekannten Kettengliedern enthält wenigstens eine - in Fig. 1 nur angedeutete - Schmiereinrichtung 7 bzw. 7' für jede Transportkette 2, eine an diese Schmiereinrichtung 7 bzw. 7' angeschlossene Schmiermittelzuführeinrichtung 8 sowie eine mit der Schmiermittelzuführeinrichtung verbundene Steuereinrichtung 9. Wesentliche Teile der Schmiermittelzuführeinrichtung 8 sind eine Zuführpumpe 10 und ein mit dieser Pumpe verbundener Schmiermittel-Vorratsbehälter 11, wobei die Zuführpumpe 10 über wenigstens eine Förderleitung 12 bzw. 12' mit der Schmiereinrichtung 7 bzw. 7' und mit der Steuereinrichtung 9 über eine Steuerleitung 13 verbunden ist.

Das eigentliche Ausbringen des Schmiermittels (vorzugsweise geeignetes Kettenöl) kann in an sich bekannter Weise etwa durch einen Sprühnebel oder einen Sprühstrahl erfolgen, wozu in der Schmiereinrichtung 7 bzw. 7' entsprechende Düsen oder dergleichen vorgesehen sind. Die Schmiereinrichtungen 7 bzw. 7' werden vorzugsweise jeweils im Bereich der Transportketten-Führungsschienen 3 außerhalb des Wärmebehandlungsraumes entweder nur am Spannmaschinen-Einlaufende E (wie durch voll ausgezogene Linien angedeutet) oder bei großen Maschinenlängen - am Einlaufende E und am Auslaufende A der Spannmaschine 1 angeordnet (letzteres ist durch die Strich-Punkt-Linien bei 7' bzw. die Förderleitung 12' angedeutet).

Ein in der Steuereinrichtung 9 enthaltener und später noch näher zu erläuternder Impulssignalzähler steht über eine Impulszählsignalleitung 14 mit einem Impulsgeber 15 in Verbindung, der im Bereich wenigstens einer der Warenbahn-Transportketten 2 angeordnet ist und die Kettenglieder letzteren zählt. Die der Kettenumlaufgeschwindigkeit und -länge proportionalen Impulse vom Impulsgeber 15 werden als Impulszählsignal der Steuereinrichtung 9 bzw. dem daran angeordneten Impulssignalzähler zugeführt, wie später noch im einzelnen erläutert wird.

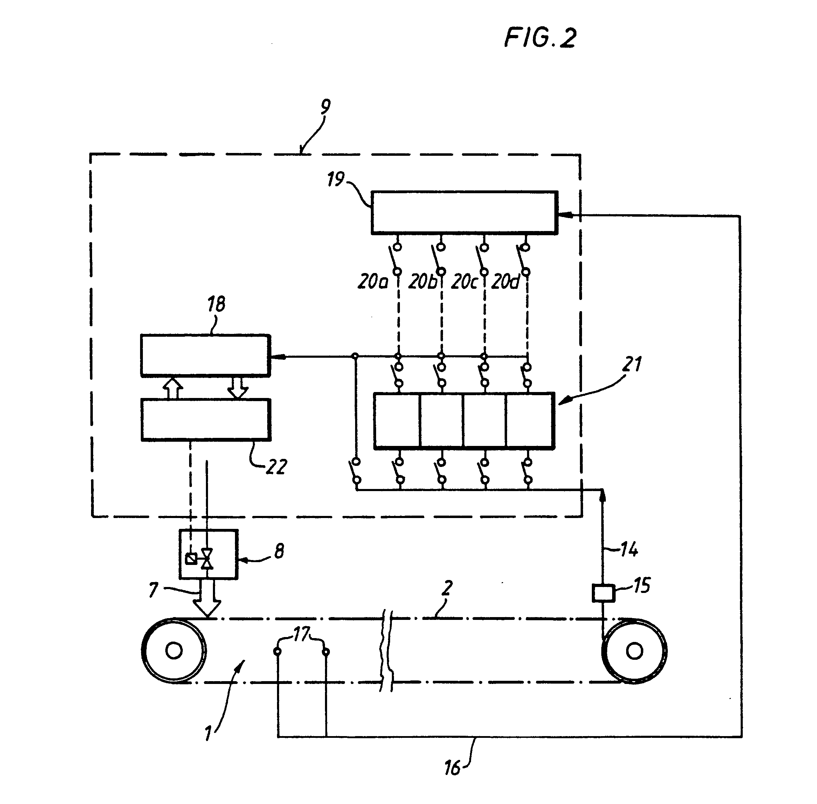

Innerhalb der Spannmaschine 1, und zwar vorzugsweise innerhalb der - in Warenbahn-Transportrichtung betrachtet - hinteren, heißen Wärmebehandlungsfelder 1d, 1n, sind mehrere Temperaturmeßelemente 17 verteilt angeordnet, die über Leitungen 16 ebenfalls mit der Steuereinrichtung 9, und zwar mit einem hierin vorgesehenen Anzeigegerät verbunden sind, das nachfolgend anhand der Fig. 2 noch im einzelnen erläutert wird.

Mit Bezug auf das vereinfachte Fließschema in Fig. 2 seien daher nun die wesentlichen Teile der Steuereinrichtung 9 sowie das Schmierverfahren selbst näher beschrieben.

Die Steuereinrichtung 9 enthält neben dem bereits erwähnten Impulssignalzähler 18 (der über die Impulszählsignalleitung 14 mit dem Impulsgeber 15 in Verbindung steht) und dem ebenfalls bereits erwähnten Anzeigegerät 19 (das mit den Temperatur-Meßelementen 17 in der Spannmaschine 1 durch die Leitung 16 verbunden ist) mehrere dem Anzeigegerät 19 zugeordnete, einstellbare Kontakte, und zwar im vorliegenden Beispiel vier einstellbare Kontakte 20a, 20b, 20c und 20d, einen zwischen diesen Kontakten 20a bis 20d und der Impulszählsignalleitung 14 angeordneten elektronischen Schalter 21 sowie einen zweiten Zähler 22.

Der Impulssignalzähler 18 ist als sogenannter Summenzähler ausgebildet und dient zur Bildung von Steuersignalen zum Ein- und Ausschalten der Schmiermittelzuführeinrichtung 8. Dieser Impulssignalzähler 18 ist steuerungsmäßig jedoch nicht direkt mit der Schmiermittelzuführeinrichtung 8, sondern über den zweiten Zähler 22 verbunden, durch den die Schmierdauer festgelegt wird und in dem als Impulszahl ein kompletter Kettenumlauf oder ein Vielfaches davon voreinstellbar ist (ein Kettenumlauf bzw. eine ganze Kettenlänge kann äußerst genau durch die Anzahl der Kettenglieder bestimmt werden).

Am Impulssignalzähler 18 kann ein wählbares Zählziel voreingestellt werden und dieses Zählziel kann durch die Zahl der Kettenglieder der Transportketten 2 so festgelegt werden, daß bei einer minimalen Arbeitstemperatur (die praktisch keinen bedeutsamen Einfluß auf einen erhöhten Schmiermittelverbrauch hat) eine bestimmte (voreinstellbare) Anzahl von Kettengliedern am Impulsgeber 15 vorbeilaufen muß, ehe die Kettenglieder bzw. die Transportketten 2 nachgeschmiert werden müssen.

Da jedoch innerhalb der Spannmaschine 1 zum Trocknen und/oder Fixieren von Warenbahnen meist höhere (über der minimalen Arbeitstemperatur liegende) Temperaturen herrschen, wird das Schmiermittel auch entsprechend der jeweiligen Höhe der Arbeitstemperatur schneller verbraucht werden. Um dies bei der Bestimmung des Schmierzeitintervalls zu berücksichtigen, wird über die Temperatur-Meßelemente 17 innerhalb der Spannmaschine 1 der jeweilige Temperatur-Istwert in den Behandlungsfeldern 1d, 1n gemessen und als Signal dem Temperaturanzeigegerät 19 (über die Leitung 16) zugeführt. Dieses Temperaturanzeigegerät 19 schließt nun in Abhängigkeit der vorhandenen Temperatur (Temperatur-Istwert) einen oder mehrere der einstellbaren Kontakte 20a bis 20d, die den unterschiedlichen Temperaturwerten sowie je einem entsprechenden Multiplikationsfaktor zugeordnet sind. Über den elektronischen Schalter 21 schaltet dann der jeweils höchstwertige Kontakt 20a...20d den jeweils zugehörigen Multiplikationsfaktor auf das vom Impulsgeber 15 herangeführte Impulszählsignal auf. Auf diese Weise wird dem Impulssignalzähler 18 nicht einfach das lediglich der Kettenumlaufgeschwindigkeit proportionale Impulszählsignal (vom Impulsgeber 15) zugeführt, sondern das Produkt, das sich aus dem um den Multiplikationsfaktor vervielfachten Impulszählsignal ergibt. Dies bedeutet, in anderen Worten, daß die vom Impulsgeber 15 festgestellte, der Kettenumlaufgeschwindigkeit proportionale Impulszahl in Abhängigkeit von der jeweils in der Spannmaschine 1 herrschenden Temperatur so manipuliert wird, als würden die Transportketten 3 schneller umlaufen (ohne daß dies tatsächlich der Fall ist), was dann zu einem häufigeren Einschalten der Schmiermittelzuführeinrichtung 8 und somit zu einem häufigeren Schmieren der Kettenglieder führen würde als bei niedrigeren bzw. minimalen Arbeitstemperaturen; im vorliegenden Beispiel bedeutet es also, daß der Impulssignalzähler 18 bei hohen Temperaturen schneller zählt und dadurch schneller das voreingestellte Zählziel erreicht (also entsprechend kurze Schmierzeitintervalle).

Wenn am Impulssignalzähler 18 das voreingestellte Zählziel erreicht ist, liefert dieser Impulssignalzähler 18 dem zweiten Zähler 22 ein Steuersignal zum Einschalten der Schmiermittelzuführeinrichtung 8. Letztere bleibt dann solange eingeschaltet, bis die am zweiten Zähler 22 voreingestellte Impulszahl erreicht ist, die - wie erwähnt - einem kompletten Kettenumlauf oder einem genauen, ganzzahligen Vielfachen davon entspricht. Über die Schmiereinrichtung 7 (bzw. 7') wird der Transportkette 2 bzw. deren Kettengliedern dann nur solange Schmiermittel zugeführt, bis das am zweiten Zähler 22 eingestellte Zählziel erreicht ist, worauf die Schmiermittelzufuhr durch Ausschalten der Schmiermittelzuführeinrichtung 8 wieder abgestellt wird. Danach wird von dem zweiten Zähler 22 auch der Impulssignalzähler 18 abgeschaltet. Nach dieser Beendigung eines Schmierzyklus werden vorzugsweise die beiden Zähler 18 und 22 auf 0 zurückgestellt, so daß bei Beginn jedes Schmierzeitintervalls auch ein neuer Zählzyklus am Impulssignalzähler 18 beginnt.

In bezug auf den zweiten Zähler 22 sei noch erwähnt, daß bei diesem zwecks Ermittlung der jeweils genauen Kettenlänge bzw. eines jeweils kompletten Kettenumlaufs stets die nicht vervielfachten, d. h. direkten Impulszählsignale vom Impulsgeber 15 zugeführt werden.

Wie sich aus der vorhergehenden Beschreibung der Vorrichtung und des Verfahrens ersehen läßt, kann in jedem Falle eine optimale Abstimmung der selbsttätigen Schmierung sowohl in Anpassung auf die jeweilige Kettenumlaufgeschwindigkeit als auch auf die jeweiligen Temperaturen innerhalb der Spannmaschine 1 herbeigeführt werden. Darüber hinaus sei schließlich nochmals auf folgende Vorteile dieses Schmierverfahrens hingewiesen:

- Es wird - unter Vermeidung von Über- und Unterschmierungen - für eine regelmäßige und ausreichende Schmierung der Warenbahn-Transportketten - insbesondere deren Kettenglieder, gesorgt;
- der Schmiermittelverbrauch kann durch Einhalten von minimal erforderlichen Mengen auf ein wirtschaftlich vertretbares Maß reduziert werden;
- durch eine stets zuverlässige Schmierung aller Kettenglieder und deren Gelenke (sowie gleichzeitig auch der entsprechenden Führungsschienenabschnitte) können eine optimale Lebensdauer und Leichtgängigkeit der Transportketten gewährleistet werden;
- die Transportketten können mit jedem geeigneten Schmiermittel geschmiert werden;
- diese Schmierverfahren sowie die Schmiervorrichtung können an jede Spannmaschine auch nachträglich angepaßt bzw. angebaut werden.

**Patentansprüche**

1. Verfahren zum selbsttätigen Schmieren der Kettenglieder einer endlos umlaufenden Transportkette, wobei die Kettenglieder als Impulse gezählt werden und das Impulszählsignal einem Zähler in einer Steuereinrichtung zugeführt wird, die die Schmiermittelzufuhr zur Transportkette über den Zähler jeweils für die Dauer wenigstens eines kompletten Kettenumlaufs einschaltet, wobei in diesem Zähler die Kettengliederzahl voreingestellt wird, die das Schmierzeitintervall bestimmt, dadurch gekennzeichnet, daß die Transportkette in einer Spannmaschine zum Trocknen und/oder Fixieren von textilen Warenbahnen verwendet wird, wobei die textilen Warenbahnen mittels der Transportkette durch mehrere hintereinandergeschaltete Wärmebehandlungsfelder dieser Spannmaschine hindurchtransportiert werden, und daß hierbei:

a) zusätzlich die Temperatur innerhalb der - in Warenbahn-Transportrichtung gesehen - zweiten Hälfte der Spannmaschine sowie an mehreren verteilten Temperaturmeßstellen gemessen wird,

b) aus den festgestellten Temperatur-Istwerten ein Multiplikationsfaktor für die der Kettenumlaufgeschwindigkeit proportionale Impulszahl gebildet wird, wobei höhere Temperaturen jeweils einen höheren Multiplikationsfaktor ergeben und umgekehrt,

c) der Multiplikationsfaktor dem Impulszählsignal aufgeschaltet wird, und

d) das sich aus dem Produkt aus Multiplikationsfaktor mal Impulszählsignal ergebende Summensignal dem Zähler zugeführt wird, der bei Erreichen eines vorgegebenen Zählzieles ein Steuersignal zum Einschalten der Schmiermittelzufuhr auslöst.

2. Verfahren nach Anspruch 1, dadurch gekennzeichnet, daß in der Spannmaschine die Lufttemperatur gemessen wird.

3. Verfahren nach Anspruch 1 oder 2, dadurch gekennzeichnet, daß das Messen der Temperatur in wenigstens einem der letzten Wärmebehandlungsfelder erfolgt.

4. Verfahren nach Anspruch 1, dadurch gekennzeichnet, daß der Zähler nach Beendigung jedes Schmiervorganges wieder auf die Ausgangsstellung zurückgestellt wird.

5. Vorrichtung zum selbsttätigen Schmieren der Kettenglieder von endlos umlaufenden Transportketten zur Durchführung des Verfahrens nach wenigstens einem der Ansprüche 1 bis 4, enthaltend:

a) eine Schmiereinrichtung (7, 7') für jede Transportkette (2),

b) eine an die Schmiereinrichtung angeschlossene Schmiermittelzuführeinrichtung (8),

c) eine mit der Schmiermittelzuführeinrichtung verbundene Steuereinrichtung (9), der eine der Kettenumlaufgeschwindigkeit und -länge proportionale Anzahl von Impulsen zuführbar ist und in der ein Impulssignalzähler (18) zur Bildung von Steuersignalen zum Ein- und Ausschalten der Schmiermittelzuführeinrichtung vorgesehen ist, wobei im Bereich wenigstens einer Transportkette ein mit dem Impulssignalzähler verbundener Impulsgeber (15) angeordnet ist, dadurch gekennzeichnet, daß

d) die Transportketten (2) für den Transport von textilen Warenbahnen in einer mehrere hintereinandergeschaltete Wärmebehandlungsfelder (1a, 1b...1n) aufweisenden Spannmaschine (1) zum Trocknen und/oder Fixieren der Warenbahn vorgesehen sind,

e) zur Ermittlung des jeweiligen Temperatur-Istwertes innerhalb der heißen Wärmebehandlungsfelder (1d, 1n) der Spannmaschine (1) wenigstens ein Temperaturmeßelement (17) angeordnet ist, das mit einem innerhalb der Steuereinrichtung (9) vorgesehenen Temperaturanzeigegerät (19) in Verbindung steht, das mehrere, unterschiedlichen Temperaturwerten zugeordnete, einstellbare Kontakte (20a ...) enthält, die je einem Multiplikationsfaktor zugeordnet sind, der über einen elektronischen Schalter (21) dem Impulszählsignal im Bereich vor dem Impulssignalzähler aufschaltbar ist,

f) der Impulssignalzähler (18) als Summenzähler ausgebildet ist und steuerungsmäßig mit der Schmiermittelzuführeinrichtung (8) über einen zweiten Zähler (22) in Verbindung steht, in dem als Impulszahl wenigstens ein kompletter Kettenumlauf voreinstellbar ist.

6. Vorrichtung nach Anspruch 5, dadurch gekennzeichnet, daß der Impulssignalzähler (18) auf ein sich aus dem Produkt Multiplikationsfaktor mal Impulszählsignal ergebendes, wählbares Zählziel voreinstellbar ist und bei Erreichen dieses Zählzieles dem zweiten Zähler (22) ein Steuersignal zum Einschalten der Schmiermittelzuführeinrichtung (8) liefert, wobei letztere durch Erreichen der voreingestellten Impulszahl des zweiten Zählers abschaltbar ist.

7. Vorrichung nach Anspruch 6, dadurch gekennzeichnet, daß der Impulssignalzähler (18) und der zweite Zähler (22) nach Beendigung eines Schmierzyklus auf Null zurückstellbar sind, wobei der Impulssignalzähler durch den zweiten Zähler zurückstellbar ist.

8. Vorrichtung nach Anspruch 5, dadurch gekennzeichnet, daß in den heißen Behandlungsfeldern (1d, 1n) mehrere Temperaturmeßelemente (17) verteilt angeordnet sind, die mit den einstellbaren Kontakten (20a, 20b, 20c, 20d) derart verbunden sind, daß in Abhängigkeit von den jeweiligen Temperatur-Istwerten an den Meßstellen einer oder mehrere Kontakte geschlossen werden und der höchstwertige Kontakt den zugehörigen höchstwertigen Multiplikationsfaktor auf das herangeführte Impulszählsignal aufschaltet.

## Claims

1. Method of automatic lubrication of the links of a continuously moving material transport chain in which the chain links are counted as pulses and the pulse count signal is supplied to a counter in a control arrangement which switches on the supply of lubricant to the transport chain via the counter in each case for the duration of at least one complete circuit of the chain, and the number of chain links which define the lubrication time interval is preset in this counter, characterised in that the transport chain is used in a tensioning machine for drying and/or fixing lengths of textile material, in which the lengths of textile material are transported by means of the transport chain through a plurality of heat treatment zones which are arranged one behind the other in this tensioning machine, and that:

a) in addition the temperature inside the second half (viewed in the material transport direction) of the tensioning machine and at a plurality of distributed temperature measurement points is measured,

b) a multiplication factor for the pulse figure which is proportional to the speed at which the chain goes round is formed from the actual values obtained for the temperature, higher temperatures in each case resulting in a higher multiplication factor and vice versa,

c) the multiplication factor is superimposed upon the pulse count signal, and

d) the total signal resulting from the product of the multiplication factor times the pulse count signal is supplied to the counter, which emits a control signal to switch on the supply of lubricant when a predetermined target figure is reached.

2. Method as claimed in claim 1, characterised in that the air temperature is measured in the tensioning machine.

3. Method as claimed in claims 1 or 2, characterised in that the measurement of the temperature is carried out in at least one of the last heat treatment zones.

4. Method as claimed in claim 1, characterised in that at the end of each lubricating operation the counter is reset to the starting position.

5. Apparatus for the automatic lubrication of the chain links of continuously moving material transport chains for carrying out the method as claimed in at least one of claims 1 to 4, containing:

a) a lubricating arrangement (7, 7') for each transport chain (2),

b) a lubricant supply arrangement (8) connected to the lubricating arrangement,

c) a control arrangement (9) which is associated with the lubricant supply arrangement and to which a number of pulses proportional to the speed at which the chain goes round and the length of the chain are supplied, a pulse signal counter (18) being provided in this control arrangement for the formation of control signals to switch the lubricant supply arrangement on and off, and a pulse generator (15) connected to the signal counter being arranged in the region of at least one transport chain, characterised in that

d) the transport chains (2) for the transport of lengths of textile material are provided in a tensioning machine (1) having a plurality of heat treatment zones (1a, 1b... 1n) connected one behind the other for drying and/or fixing the length of material,

e) in order to determine the current actual value for the temperature at least one temperature measuring element (17) is arranged inside the tensioning machine (1) and is connected to the temperature indicator device (19) which is provided inside the control arrangement (9) and contains several adjustable contacts (20a...) which are associated with different temperature values and are each associated with a multiplication factor which can be superimposed upon the pulse count signal in the region before the pulse signal counter by means of an electronic switch (21),

f) the pulse signal counter (18) is connected for control purposes to the lubricant supply-arrangement (8) by means of a second counter (22) in which at least one complete circuit of the chain can be preset as the pulse number.

6. Apparatus as claimed in claim 5, characterised in that the pulse signal counter (18) can be preset to a chosen target figure which results from the product of the multiplication factor times the pulse count signal and supplies a control signal to the second counter (22) to switch on the lubricant supply arrangement (8) when this target figure is reached, and the lubricant supply arrangement can be switched off when the preset pulse figure is reached in the second counter.

7. Apparatus as claimed in claim 6, characterised in that the pulse signal counter (18) and the second counter (22) can be reset to zero after a lubricating cycle has been completed, the pulse signal counter being reset by the second counter.

8. Apparatus as claimed in claim 5, characterised in that inside the hot treatment zones (1d, 1n) of the tensioning machine (1) a plurality of temperature measuring elements (17) are distributed which are connected to the adjustable contacts (20a, 20b, 20c, 20d) in such a way that one or more contacts are closed as a function of the current actual values for the temperature at the measuring points and the contact for the highest value superimposes the appertaining multiplication factor for the highest value onto the pulse count signal.

## Revendications

1. Procédé de lubrification automatique des maillons d'une chaîne transporteuse sans fin, en défilement continu, les maillons étant comptés sous forme d'impulsions et le signal correspondant étant dirigé sur un compteur d'un appareillage de commande qui enclenche par l'intermédiaire du compteur l'injection de lubrifiant sur la chaîne pour la durée d'au moins un tour complet de cette dernière, le nombre des maillons qui détermine l'intervalle de temps de lubrification étant présélectionné dans ce compteur, caractérisé en ce que:

la chaîne transporteuse est utilisée dans une rame de séchage et/ou de fixage de nappes de produit textile, ces dernières étant transportées par la chaîne de manière qu'elles passent par plusieurs zones successives de traitement thermique de cette rame et, par ailleurs:

a) la température est accessoirement mesurée dans la seconde moitié - vue dans le sens de transport de la nappe de produit textile - de la rame et en plusieurs points répartis,

b) un facteur de multiplication du nombre d'impulsions proportionnel à la vitesse de défilement de la chaîne est formé à partir des températures réelles mesurées, des températures élevées donnant un facteur de multiplication élevé, et inversement,

c) le facteur de multiplication est transmis au signal de comptage des impulsions, et

d) le signal de sommation résultant du produit du facteur de multiplication par le signal de comptage des impulsion est dirigé sur le compteur qui, lorsqu'un compte prescrit est atteint, déclenche un signal de commande d'enclenchement de l'injection du lubrifiant.

2. Procédé selon la revendication 1, caractérisé en ce que la température mesurée dans la rame est celle de l'air.

3. Procédé selon les revendications 1 ou 2, caractérisé en ce que la mesure de la température a lieu dans au moins l'une des dernières zones de traitement thermique.

4. Procédé selon la revendication 1, caractérisé en ce que le compteur est remis en position initiale à la fin de chaque processus de lubrification.

5. Installation de lubrification automatique des maillons de chaînes transporteuses sans fin, en défilement continu, pour la mise en oeuvre du procédé selon l'une au moins des revendications 1 à 4, comprenant:

a) un lubrificateur (7, 7') pour chaque chaîne transporteuse (2),

b) un appareillage d'injection (8) raccordé à chaque lubrificateur,

c) un appareillage de commande (9) relié à l'appareillage d'injection de lubrifiant, destiné à recevoir un nombre d'impulsions proportionnel à la vitesse de défilement et à la longueur des chaînes et incluant un compteur d'impulsions (18) destiné à former des signaux de commande d'enclenchement et de déclenchement de l'appareillage d'injection de lubrifiant, un générateur d'impulsions (15) relié au compteur d'impulsions étant disposé à proximité d'au moins une chaîne transporteuse, caractérisée en ce que:

d) les chaînes (2) de transport de nappes de produit textile sont prévues dans une rame (1) de séchage et/ou de fixage de la nappe de produit textile, rame qui comprend plusieurs zones successives de traitement thermique (1a, 1b... 1n),

e) au moins un élément (17) de mesure de la température réelle momentanée à l'intérieur des zones chaudes de traitement thermique (1d, 1n) de la rame (1) est relié à un appareil d'affichage de la température (19) prévu à l'intérieur de l'appareillage de commande (9) et comprenant plusieurs contacts réglables (20a...) affectés à des températures différentes, chacun de ces contacts étant également affecté à un facteur de multiplication qu'un commutateur électronique (21) est destiné à transmettre au signal de comptage des impulsions en amont du compteur d'impulsions,

f) le compteur d'impulsions (18) est du type à sommation et l'appareillage d'injection de lubrifiant (8) lui est asservi par l'intermédiaire d'un second compteur (22) dans lequel est présélectionné un nombre d'impulsions qui correspond à au moins un tour complet de la chaîne.

6. Installation selon la revendication 5, caractérisée en ce que le compteur d'impulsions (18) est destiné à recevoir initialement un compte sélectionnable résultant du produit du facteur de multiplication par le signal de comptage des impulsions et, lorsque ce compte est atteint, il délivre au second compteur (22) un signal de commande du déclenchement de l'appareillage (8) d'injection de lubrifiant, ce dernier étant arrêté lorsque le nombre prescrit d'impulsions entré dans le second compteur est atteint.

7. Installation selon la revendication 6, caractérisée en ce que le compteur d'impulsions (18) et le second compteur (22) sont destinés à être remis à zéro à la fin d'un cycle de lubrification, le second compteur assurant la remise à zéro du compteur d'impulsions.

8. Installation selon la revendication 5, caractérisée en ce que plusieurs éléments (17) de mesure de la température répartis dans les zones chaudes de traitement thermique (1d, 1n) sont reliés à des contacts réglables (20a, 20b, 20c, 20d) de manière qu'un ou plusieurs contacts soient fermés en fonction des températures réelles momentanée qui règnent aux points de mesure, le contact à maximum transmettant le facteur de multiplication le plus élevé correspondant au signal reçu de comptage d'impulsions.

FIG. 1

## FIG.2